# FASCICULE DE BREVET EUROPEEN

(11) **EP 1 961 529 B1**
(45) Date de publication et mention de la délivrance du brevet: **24.07.2013**
(21) Numéro de dépôt: 08358004.3
(22) Date de dépôt: 25.02.2008
(51) Int. Cl.: B27B 17/12, F16N 7/38, F16N 29/02

(54) **Scie à chaîne pourvue d'un dispositif de lubrification et procédé mis en oeuvre pour réaliser cette lubrification**
Kettensäge mit einer Schmiervorrichtung und Umsetzungsverfahren dieser Schmierung
Chainsaw equipped with a lubrication device and method implemented to perform this lubrication

(30) Priorité: 26.02.2007 FR 0701357
(43) Date de publication de la demande: 27.08.2008
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A- 0 076 002
- EP-A- 0 793 910
- DE-U1- 20 316 483
- FR-A- 2 505 719
- US-A1- 2005 086 813

## Description

La présente invention concerne une scie à chaîne pourvue d'un dispositif de lubrification de l'ensemble guide-chaîne / chaîne de coupe selon le préambule de la revendication 1. Elle vise aussi le procédé mis en oeuvre pour réaliser cette lubrification.

Une telle scie à chaîne est connue du document FR 2505719 A1.

De tels outils à chaîne de coupe couramment appelés tronçonneuses sont bien connus et sont communément utilisés pour débiter des matériaux divers (bois, béton, briques, carreaux, etc.). Ils comprennent un dispositif de coupe constitué par une chaîne de coupe sans fin montée tournante autour d'un pignon d'entraînement et d'un guide-chaîne de forme généralement oblongue et muni d'un rail périphérique de guidage, et une source de puissance (par exemple constituée par un moteur thermique ou par un moteur électrique) réalisant l'entraînement de cette chaîne, par l'intermédiaire dudit pignon.

Pour le bon fonctionnement d'un outil de ce genre, il est indispensable d'assurer un graissage efficace entre le guide-chaîne et la chaîne de coupe afin de réduire les frottements générateurs d'échauffements, de perte d'efficacité, d'usure accélérée et de surconsommation d'énergie.

Dans ce but, un liquide de lubrification est stocké dans un réservoir où il est prélevé avant d'être acheminé vers l'ensemble guide-chaîne/chaîne de coupe par un conduit approprié. L'entraînement du liquide de lubrification sur l'ensemble guide-chaîne/chaîne de coupe est généralement réalisé par l'intermédiaire d'une pompe. Il est parfois obtenu par gravité (peu efficace) ou par la mise en surpression du réservoir de stockage (dosage difficile car dépendant de la pression et variant avec celle-ci).

Lorsque le liquide de lubrification est entraîné vers l'ensemble guide-chaîne/chaîne de coupe par une pompe, ce qui correspond au cas le plus courant, cette pompe et la chaîne de coupe sont entraînées par le même moteur. La lubrification de la chaîne s'effectue alors en permanence et proportionnellement à la vitesse de rotation de ce moteur, ce qui entraîne une importante consommation de liquide de lubrification, sans pour autant être toujours suffisante lors de conditions de fonctionnement particulièrement difficiles qui accompagnent un freinage de la chaîne et un ralentissement du moteur, et donc d'une moindre lubrification de la chaîne.

Le document FR 2 505 719 décrit un dispositif de ce genre. Selon ce document, la pompe électro-magnétique de lubrification de la tronçonneuse est actionnée par le moteur thermique d'entraînement de la chaîne de cette dernière, par l'intermédiaire d'une magnéto et d'un micro-calculateur.

Plus concrètement, avec les procédés et systèmes de lubrification actuels, le bon dosage de la quantité d'huile prélevée dans le réservoir est difficile car le débit de la pompe augmente avec la vitesse de rotation du moteur et peut conduire à délivrer inutilement des volumes d'huile trop importants ; de plus, comme cette vitesse diminue lorsqu'on demande plus d'effort à la coupe, on diminue aussi la quantité d'huile envoyée sur la chaîne alors que c'est le moment où un bon graissage serait nécessaire pour réduire l'échauffement et l'usure.

L'invention a au moins pour buts d'améliorer l'efficacité de la lubrification de l'ensemble guide-chaîne/chaîne de coupe des scies à chaîne et de leur pignon d'entraînement, de réduire la consommation de liquide de lubrification et d'éviter les projections sur l'opérateur qui sont fréquentes et occasionnent des salissures et des brûlures.

Selon l'invention, ce but est atteint grâce à une scie à chaîne définie par la revendication 1.

Selon une autre importante disposition caractéristique, le moteur électrique d'entraînement de la pompe est piloté par une carte électronique, qui reçoit des données relatives à au moins un paramètre et/ou facteur de fonctionnement de ladite scie à chaîne.

De préférence, le moteur d'entraînement de la chaîne de coupe est constitué par un moteur électrique et ce moteur électrique est piloté par une carte électronique.

Selon un mode d'exécution avantageux, la carte électronique de pilotage de la pompe électrique reçoit des données concernant le courant consommé par le moteur électrique d'entraînement de la chaîne de coupe et/ou relatives au couple de ce moteur, via la carte électronique de pilotage dudit moteur électrique, en cours d'utilisation de ladite scie à chaîne.

De préférence, la carte électronique de pilotage de la pompe électrique reçoit des données émanant de la carte électronique de pilotage du moteur électrique d'entraînement de la chaîne de coupe.

Selon un mode d'exécution intéressant, la carte électronique de pilotage de la pompe électrique reçoit et traite des données issues d'un ou plusieurs capteurs.

Selon un mode d'exécution, la scie à chaîne comporte un capteur permettant d'adresser, à la carte électronique de pilotage de la pompe électrqiue, des informations concernant la température du guide-chaîne.

Selon un autre mode de réalisation, la carte électronique de pilotage de la pompe électrique est configurée pour utiliser des informations relatives au débit du liquide de lubrification.

Avantageusement, la carte électronique de pilotage de la pompe électrique est configurée pour commander un fonctionnement intermittent de la pompe, afin d'adresser des doses de liquide de lubrification, vers le système de coupe.

De manière préférée, la carte électronique de pilotage de la pompe électrique est configurée pour que l'envoi des doses successives soit espacé d'une période sensiblement constante et que les quantités de liquide de lubrification dans les doses soient fonction d'au moins l'un des paramètres ou facteurs de fonctionnement susmentionnés.

De manière intéressante, la pompe d'entraînement du liquide de lubrification est une pompe volumétrique, par exemple une pompe péristaltique, ou une pompe à membrane, ou une pompe à piston, ou une pompe à palettes, ou une pompe à engrenage.

Avantageusement, un même accumulateur de stockage d'énergie électrique alimente à la fois le moteur de ladite pompe électrique et le moteur d'entraînement du dispositif de coupe qui, dans ce cas, est constitué par un moteur électrique.

La scie à chaîne peut également comporter un dispositif de détection d'un débit insuffisant de liquide de lubrification vers le dispositif de coupe et de déclenchement d'un signal visuel ou sonore en cas de détection d'un tel débit insuffisant.

Selon une autre disposition caractéristique intéressante de l'invention applicable aux scies à chaîne à perche, selon lesquelles une tête de scie comprenant les différents organes du dispositif de coupe et de leur système d'entraînement, est montée à l'extrémité haute d'une perche dont l'extrémité inférieure est munie d'une poignée de commande, le réservoir de stockage de liquide de lubrification et la pompe électrique de distribution de ce liquide de lubrification sont installés au niveau de ladite poignée, un conduit d'acheminement du liquide de lubrification reliant le réservoir de stockage au dispositif de coupe, ce conduit étant de préférence, logé dans ladite perche.

L'invention a également pour objet un procédé de lubrification de la chaîne de coupe d'une scie à chaîne telle que définie ci-dessus, dans lequel on pilote le débit de la pompe de distribution du liquide de lubrification, en fonction de la valeur d'au moins un paramètre ou facteur de fonctionnement de ladite scie à chaîne.

Une autre caractéristique avantageuse de ce procédé peut être qu'on envoie de manière intermittente des doses de liquide de lubrification vers le dispositif de coupe.

Selon un mode de mise en oeuvre de ce procédé, on envoie les doses de liquide lubrification en espaçant les départs de ces doses d'une période sensiblement constante, lesdites doses contenant des quantités de liquide de lubrification qui sont fonction dudit paramètre ou facteur de fonctionnement.

Le dispositif et le procédé de lubrification selon l'invention procurent plusieurs avantages très intéressants :
- ils permettent un dosage entièrement automatique de la lubrification, grâce auquel on obtient une diminution très sensible de l'échauffement et de l'usure de l'ensemble guide-chaîne/chaîne de coupe ;
- ils réalisent un meilleur dosage de l'huile pour un bon fonctionnement du dispositif de coupe, quelles que soient les conditions d'utilisation de l'outil, ce qui permet une importante réduction de la consommation d'huile ;
- ils conviennent aussi bien aux scies à chaîne à poignée qu'aux tronçonneuses à perche.

L'invention sera mieux comprise à la lecture de la description qui suit, donnée uniquement à titre d'exemple et faite en se référant aux dessins annexés, selon lesquels :
- la figure 1 est une vue en perspective d'une scie à chaîne à perche à laquelle peut être appliquée l'invention ;
- la figure 2 est une vue en perspective, avec arrachements, de cette scie à chaîne pourvue du dispositif de lubrification de ses organes de coupe ;
- la figure 3 est une vue synoptique du dispositif de lubrification de la figure 2 et d'un circuit électrique associé.

On se reporte aux dits dessins pour décrire un exemple avantageux, bien que nullement limitatif, de réalisation de la scie à chaîne et du procédé de mise en oeuvre de son système de lubrification selon l'invention.

On décrit ci-après une scie à chaîne et à perche, mais on souligne que l'invention est aussi applicable aux scies à chaîne à poignée de tous types (à poignée simple, à poignée surélevée, etc.) destinées à tous travaux (travaux d'élagage, travaux forestiers, sciage de matériaux divers...).

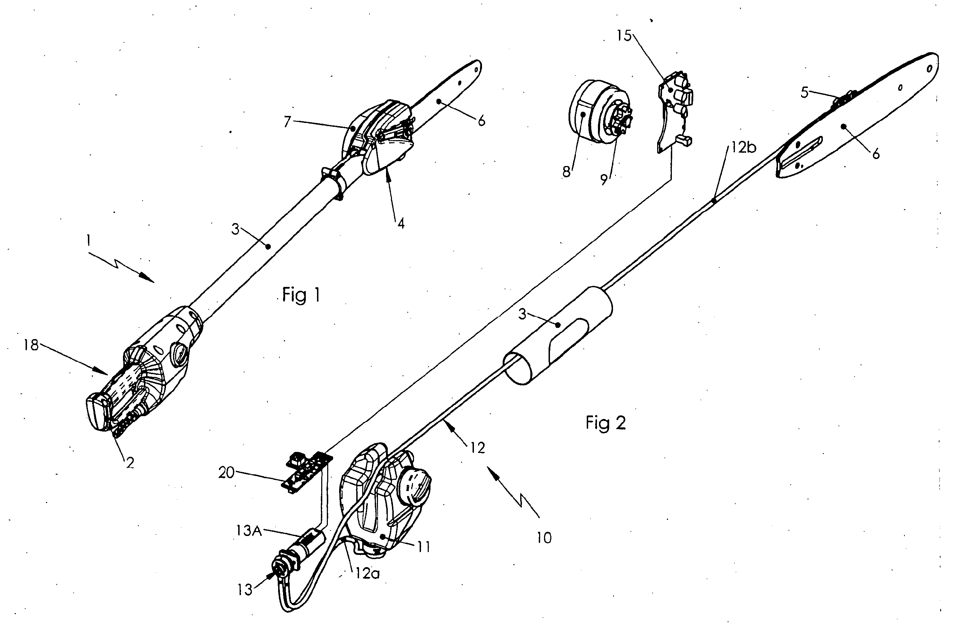

Sur la figure 1 est représentée une scie à chaîne à perche 1 qui comporte une poignée 2 de commande montée à l'extrémité inférieure d'une perche tubulaire 3, à la partie supérieure de laquelle est montée, de manière orientable, une tête de coupe 4.

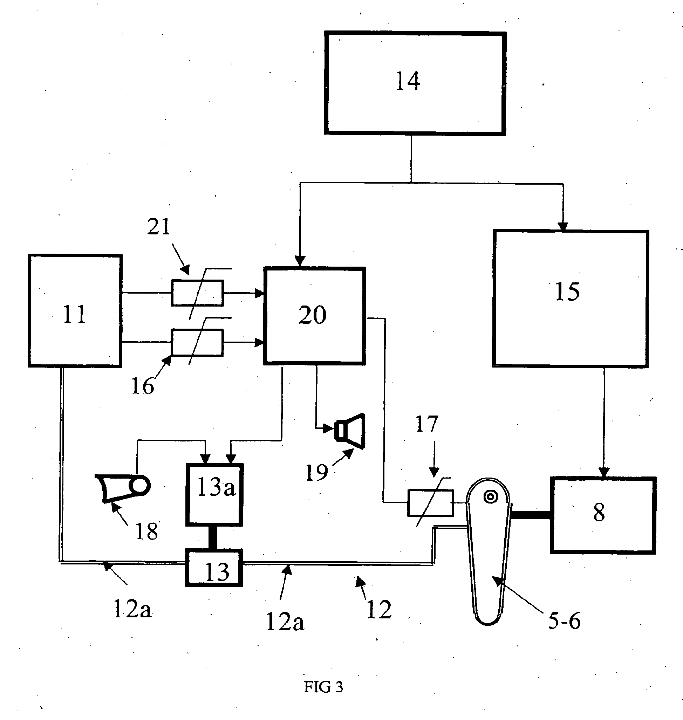

La tête de coupe 4 comprend une chaîne de coupe 5 sans fin, montée à la périphérie d'un guide-chaîne 6 et sur un pignon d'entraînement 9. L'entraînement de cette chaîne de coupe 5, via le pignon d'entraînement 9, est réalisé par un moteur électrique se trouvant à l'intérieur d'un carter 7 à la figure 1 et référencé 8 à la figure 3. On n'exclut pas de réaliser cet entraînement au moyen d'un moteur thermique.

Ainsi qu'on peut le voir sur la figure 2 sur laquelle la perche 3 est partiellement représentée, un dispositif de lubrification du système de coupe (guide-chaîne 6, chaîne 5 et pignon d'entraînement) est monté à l'extrémité inférieure de la perche 3, au niveau de la poignée 2. Ce dispositif de lubrification désigné dans son ensemble par la référence 10 comprend un réservoir de stockage 11 qui est destiné à contenir une réserve de liquide de lubrification tel que de l'huile et qui communique avec un conduit 12 d'acheminement de ce liquide jusqu'à la tête de coupe 4. Sur ce conduit 12, est raccordée une pompe 13 d'entraînement du liquide de lubrification vers ladite tête de coupe.

Selon une première disposition caractéristique de l'invention, la pompe 13 est accouplée à un moteur d'entraînement électrique 13a indépendant du moteur 8 d'entraînement de la chaîne de coupe 5 du dispositif de coupe 5-6 et faisant partie intégrante de l'outil.

Avantageusement, la pompe électrique 13 est une pompe volumétrique capable d'envoyer le liquide de lubrification de manière intermittente, sous forme de doses successives, vers la tête de coupe 4. De préférence, il s'agit d'une pompe péristaltique, qui présente l'avantage d'être simple, robuste et fiable. Toutefois, la pompe électrique 13 délivrant le liquide de lubrification peut être constituée par tout autre type de pompe approprié, tel que pompe à membrane, ou pompe à piston, ou pompe à palettes, ou pompe à engrenage...

Le réservoir 11, la pompe 13 et son moteur électrique d'entraînement 13a, sont logés dans le carter délimitant la poignée 2, d'où part le tronçon d'aspiration 12a du conduit 12. Le tronçon de refoulement 12b de ce conduit 12, de préférence constitué par un tuyau flexible, chemine ensuite à l'intérieur de la perche 3. D'une manière connue en soi, il se prolonge dans le guide-chaîne 6 sous la forme d'un trou de distribution ménagé dans ce dernier et débouchant sous la chaîne 5.

Selon une autre importante disposition caractéristique, le moteur électrique 13a d'entraînement de la pompe 13 est piloté par une carte électronique 20 configurée de manière appropriée, et la scie à chaîne comporte au moins un capteur permettant d'adresser, à ladite carte électronique, des informations relatives à au moins un paramètre ou facteur de fonctionnement de ladite scie à chaîne.

On se réfère maintenant à la vue synoptique de la figure 3, pour décrire de façon plus complète, le système et le procédé de lubrification selon l'invention.

De manière préférée, le moteur 8 d'entraînement de la chaîne de coupe 5 est constitué par un moteur électrique et ce moteur électrique est également piloté par une carte électronique 15.

Un même accumulateur 14 de stockage d'énergie électrique, de préférence constitué par une batterie portative, peut alimenter à la fois le moteur 13a de la pompe électrique 13 et le moteur électrique d'entraînement 8 du dispositif de coupe 5-6.

La carte électronique de pilotage 20 de la pompe électrique reçoit des données concernant le courant électrique consommé par le moteur électrique 8 d'entraînement de la chaîne de coupe, et/ou relatives au couple dudit moteur 8, via la carte électronique de pilotage 15 de ce dernier, en cours d'utilisation de la scie à chaîne.

La carte électronique de pilotage 20 de la pompe électrique 13-13a reçoit et traite des données issues d'un ou plusieurs capteurs. Par exemple, la scie à chaîne est munie :
- d'un capteur 17 permettant d'adresser, à la carte électronique de pilotage 20, des données concernant la température du guide-chaîne 6 et/ou
- d'un capteur 16 permettant d'adresser, à ladite carte électronique de pilotage 20, des données relatives au débit du liquide de lubrification., vers le dispositif de coupe 5-6, et
- d'un capteur 21 permettant d'adresser, à ladite carte électronique 20, des données concernant le niveau du liquide de lubrification contenu dans le réservoir 11.

La carte électronique 20 de pilotage de la pompe électrique 13-13a peut être configurée pour commander l'entraînement à vitesse variable de ladite pompe, en fonction d'au moins un paramètre issu des données relatives au courant électrique consommé par le moteur 8 d'entraînement de la chaîne de coupe, au couple de ce moteur, et/ou issu du capteur de température 17 du guide-chaîne 6, ou du capteur du débit d'huile 16, ou du capteur 21 de niveau d'huile.

La carte électronique 20 de pilotage de la pompe électrique 13-13a est avantageusement configurée pour commander un fonctionnement intermittent de cette pompe afin d'adresser des quantités dosées de liquide de lubrification, vers le système de coupe 5-6.

La carte électronique 20 de pilotage est configurée pour que l'envoi des doses successives de liquide de lubrification soit espacé d'une période sensiblement constante et que les quantités de liquide de lubrification dans les doses soient fonction d'au moins l'un des paramètres ou facteurs de fonctionnement susmentionnés.

La pompe d'entraînement 13 du liquide de lubrification est constituée par une pompe volumétrique, par exemple une pompe péristaltique, ou une pompe à membrane, ou un pompe à piston, ou une pompe à palettes, ou une pompe à engrenage.

De préférence, et comme indiqué ci-dessus, la scie à chaîne comporte un dispositif de détection 21 d'un niveau insuffisant de liquide de lubrification dans le réservoir 11. Les insuffisances de débit ou de niveau d'huile constatées par les capteurs 16 ou 21, respectivement, entraînent le déclenchement, via la carte électronique de pilotage 20, d'un signal visuel ou sonore 19.

Dans l'application de l'invention aux tronçonneuses à perche (figures 1 et 2), selon laquelle une tête de scie 4 comprenant les différents organes du dispositif de coupe 5-6 et de leur système d'entraînement 8, est montée à l'extrémité haute d'une perche 3 dont l'extrémité inférieure est munie d'une poignée de commande 2, le réservoir 11 de stockage du liquide de lubrification et la pompe électrique 13-13a de distribution de ce liquide de lubrification, sont installés au niveau de ladite poignée 2 et un conduit 12a-12b d'acheminement du liquide de lubrification relie le réservoir de stockage 11 au dispositif de coupe 5-6 via ladite pompe, ce conduit 11 étant de préférence logé dans ladite perche 3.

Dans cette application, la carte électronique de pilotage 20 de la pompe électrique 13-13a peut être installée au niveau de la poignée 2, tandis que la carte électronique de pilotage 15 du moteur 8 d'entraînement de la chaîne de coupe 5 peut être positionnée au niveau de la tête de coupe 4.

Dans d'autres applications, telles que les tronçonneuses à poignée simple ou à poignée surélevée, les composants des cartes électroniques de pilotage 15 et 20, peuvent être rassemblés sur un même support et installés au niveau de la poignée de commande de l'outil.

De manière avantageuse, la scie à chaîne selon l'invention comporte encore un agencement permettant un actionnement direct de la pompe électrique 13-13a à partir d'un organe de commande manuelle, par exemple constitué par une gâchette 18 accessible sur la poignée 2 de l'outil, de sorte à permettre d'envoyer, de préférence de façon continue, de l'huile vers l'ensemble guide-chaîne/chaîne de coupe 5-6, sans passer par la carte électronique de pilotage 20 de ladite pompe électrique 13-13a. Une telle lubrification forcée est par exemple utilisée pour faire monter l'huile du réservoir 11 à la tête de coupe 5-6 lors de la première mise en route de l'outil, ou lorsque le circuit d'huile 12a est vide, avant l'actionnement du moteur 8, ou pour obtenir une purge de l'orifice de distribution d'huile ménagé dans le guide de chaîne 6.

Selon le procédé de l'invention, on pilote la pompe électrique de distribution 13-13a du liquide de lubrification, au moyen d'une carte électronique 20 en fonction de la valeur d'au moins un paramètre ou facteur de fonctionnement de la scie à chaîne.

Suivant un mode d'exécution avantageux, on envoie, de manière intermittente, des doses de liquide de lubrification vers le dispositif de coupe 5,6.

De manière préférée, dans ce cas, on envoie les doses de liquide de lubrification en espaçant les départs de ces doses d'une période sensiblement constante, les dites doses contenant des quantités de liquide de lubrification qui sont fonction dudit paramètre ou facteur de fonctionnement.

## Revendications

1. Scie à chaîne comportant une chaîne de coupe sans fin (5), montée tournante sur un pignon d'entraînement et sur un guide-chaîne (6) muni d'un rail de guidage, un moteur d'entraînement (8) de cette chaîne de coupe, par l'intermédiaire dudit pignon, un réservoir (11) de stockage d'un liquide de lubrification, ainsi qu'une pompe d'entraînement (13) du liquide de lubrification vers l'ensemble guide-chaîne/chaîne de couple (5-6), depuis le réservoir de stockage (11), ladite pompe (13) étant accouplée à un moteur d'entraînement électrique (13a) **caractérisée en ce que** ledit moteur d'entraînement de la pompe est indépendant du moteur d'entraînement (8) de la chaîne de coupe (5), permettant un actionnement direct de la pompe électrique à partir d'un organe de commande manuelle avant l'actionnement du moteur d'entraînement de la chaîne de coupe.

2. Scie à chaîne selon la revendication 1, **caractérisée en ce que** le moteur électrique (13a) d'entraînement de la pompe (13) est piloté par une carte électronique (20), qui reçoit des informations relatives à au moins un paramètre ou facteur de fonctionnement de ladite scie à chaîne, de façon à moduler le débit de lubrification.

3. Scie à chaîne selon l'une des revendications 1 ou 2, dont le moteur d'entraînement de la chaîne de coupe (5) est constitué par un moteur électrique (8), **caractérisée en ce que** le moteur électrique est piloté par une carte électronique (15).

4. Scie à chaîne selon la revendication 3, **caractérisée en ce que** la carte électronique (20) de pilotage de la pompe électrique (13-13a) est configurée pour recevoir des données émanant de la carte électronique de pilotage (15) du moteur électrique (8) d'entraînement de la chaîne de coupe (5).

5. Scie à chaîne selon l'une des revendications 3 ou 4, **caractérisée en ce que** la carte électronique (20) de pilotage de la pompe électrique (13-13a) et la carte électronique de pilotage (15) du moteur électrique (8) d'entraînement de la chaîne de coupe (5), sont confondues dans une seule et même carte électronique.

6. Scie à chaîne selon l'une des revendications 3, 4 ou 5, **caractérisée en ce qu'**un même accumulateur de stockage d'énergie électrique (14) alimente à la fois le moteur (13a) de ladite pompe électrique (13) et le moteur d'entraînement (8) du dispositif de coupe (5-6).

7. Scie à chaîne selon l'une quelconque des revendications 3, 4 ou 5, **caractérisée en ce que** la carte électronique de pilotage (20) de la pompe électrique (13-13a) reçoit des données concernant le courant consommé par le moteur électrique (8) d'entraînement de la chaîne de coupe (5), via la carte électronique de pilotage (15) dudit moteur électrique, en cours d'utilisation de ladite scie à chaîne.

8. Scie à chaîne selon l'une des revendications 3, 4 ou 5, **caractérisée en ce que** la carte électronique de pilotage (20) de la pompe électrique (13-13a) reçoit des données concernant le couple du moteur électrique (8) d'entraînement de la chaîne de coupe (5), via la carte électronique de pilotage (15) dudit moteur électrique, en cours d'utilisation de ladite scie à chaîne.

9. Scie à chaîne selon l'une des revendications 2 à 8, **caractérisée en ce que** la carte électronique de pilotage (20) de la pompe électrique (13-13a) reçoit et traite des données issues d'un ou plusieurs capteurs.

10. Scie à chaîne suivant l'une des revendications 2 à 9, **caractérisée en ce qu'**elle comporte un capteur (17) permettant d'adresser, à la carte électronique de pilotage (20) de la pompe électrique (13) des données concernant la température du guide-chaîne (6).

11. Scie à chaîne selon l'une quelconque des revendications 2 à 10, **caractérisée en ce qu'**elle comporte un capteur (16) permettant d'adresser, à la carte électronique (20) de pilotage de la pompe électrique (13-13a) des données relatives au débit du liquide de lubrification.

12. Scie à chaîne suivant l'une quelconque des revendications 3 à 11, **caractérisée en ce que** la carte électronique (20) de pilotage de la pompe électrique (13-13a) est configurée pour commander l'entraînement à vitesse variable de ladite pompe, en fonction d'au moins un paramètre issu des données relatives au courant consommé par le moteur (8) d'entraînement de la chaîne de coupe (5), ou au couple de ce moteur, et/ou issu d'un capteur de température (17) du guide-chaîne (6), et/ou d'un capteur (16) du débit d'huile, et/ou d'un capteur (21) de niveau d'huile.

13. Scie à chaîne suivant l'une quelconque des revendications 2 à 12, **caractérisée en ce que** la carte électronique (20) de pilotage de la pompe électrique (13-13a) est configurée pour commander un fonctionnement intermittent de cette pompe (13) afin d'adresser des doses de liquide de lubrification, vers le dispositif de coupe (5-6).

14. Scie à chaîne selon la revendication 13, **caractérisée en ce que** la carte électronique (20) de pilotage est configurée pour que l'envoi des doses successives soit espacé d'une période sensiblement constante et que les quantités de liquide de lubrification dans les doses soient fonction d'au moins l'un des paramètres et/ou facteurs de fonctionnement de la scie.

15. Scie à chaîne selon l'une quelconque des revendications 1 à 14, **caractérisée en ce que** la pompe d'entraînement (13) du liquide de lubrification est une pompe volumétrique, par exemple une pompe péristaltique, ou une pompe à membrane, ou un pompe à piston, ou une pompe à palettes, ou une pompe à engrenage.

16. Scie à chaîne suivant l'une quelconque des revendications 1 à 15, **caractérisée en ce qu'**elle comporte un dispositif de détection (16) d'un débit insuffisant de liquide de lubrification vers le dispositif de coupe (5-6) et de déclenchement d'un signal visuel ou sonore (19) en cas de détection d'un tel débit insuffisant.

17. Scie à chaîne selon l'une quelconque des revendications 2 à 16, **caractérisée en ce qu'**elle comporte un dispositif (21) de contrôle du niveau du liquide de lubrification contenu dans le réservoir (11), les insuffisances de débit constatées par ce dispositif (21) entraînant le déclenchement, via la carte électronique de pilotage (20) de la pompe électrique (13-13a), d'un signal visuel ou sonore (19).

18. Scie à chaîne selon l'une quelconque des revendications 1 à 17, du genre tronçonneuse à perche, selon lequel une tête de scie (4) comprenant les différents organes du dispositif de coupe (5-6) et de leur système d'entraînement (8), est montée à l'extrémité haute d'une perche (3) dont l'extrémité inférieure est munie d'une poignée de commande (2), **caractérisée en ce que** le réservoir (11) de stockage de liquide de lubrification et la pompe électrique (13-13a) de distribution de ce liquide de lubrification sont installés au niveau de ladite poignée (2), un conduit (12) d'acheminement du liquide de lubrification reliant le réservoir de stockage (11) au dispositif de coupe (5,6), ce conduit (11) étant de préférence logé dans ladite perche (3).

19. Scie à chaîne selon l'une quelconque des revendications 9 à 18, **caractérisée en ce qu'**elle comporte un agencement permettant un actionnement direct de la pompe électrique (13-13a), à partir d'un organe de commande manuelle (18), de sorte à permettre d'envoyer de l'huile vers l'ensemble guide-chaîne/chaîne de coupe (5,6).

20. Procédé de lubrification du dispositif de coupe d'une scie à chaîne selon la revendication 1, **caractérisé en ce que** l'on pilote le débit de la pompe électrique de distribution (13-13a) du liquide de lubrification, au moyen d'une carte électronique (20) en fonction de la valeur d'au moins un paramètre et/ou un facteur de fonctionnement de ladite scie à chaîne.

21. Procédé de lubrification suivant la revendication 20, **caractérisé en ce qu'**on envoie de manière intermittente des doses de liquide de lubrification vers le dispositif de coupe (5,6).

22. Procédé de lubrification selon la revendication 21, **caractérisé en ce qu'**on envoie les doses de liquide de lubrification en espaçant les départs de ces doses d'une période sensiblement constante, les dites doses contenant des quantités de liquide de lubrification qui sont fonction dudit paramètre ou facteur de fonctionnement

## Patentansprüche

1. Kettensäge mit einer endlosen Sägekette (5), die drehbar an einem Antriebsritzel montiert ist und eine Kettenführung (6), die mit einer Führungsschiene versehen ist, einem Antriebsmotor (8), um die Sägekette über das Ritzel anzutreiben, ein Reservoir (11) zum Aufbewahren einer Schmiermittelflüssigkeit sowie einen Pumpenantrieb (13) der Schmiermittelflüssigkeit aus dem Vorratsbehälter (11) zur Kettenführung / Sägeketteneinheit (5, 6) befördert, sowie einen Pumpenantrieb (13) mit einem elektrischen Antriebsmotor (13a), wobei der Pumpenantriebsmotor unabhängig vom Antriebsmotor (8) der Sägekette (5) ausgebildet ist, was eine direkte Ansteuerung der elektrischen Pumpe durch ein manuelles Steuerorgan vor der Betätigung des Antriebsmotors der Sägekette erlaubt.

2. Kettensäge nach Anspruch 1, **dadurch gekennzeichnet, daß** der elektrische Antriebsmotor (13a) des Pumpenantriebs (13) durch eine elektronische Karte (20) angesteuert wird, die Informationen empfängt, die sich auf mindestens einen Parameter oder Betriebsparameter der Kettensäge beziehen, um den Schmiermittelfluss zu modulieren.

3. Kettensäge nach Anspruch 1 oder 2, wobei der Antriebsmotor der Sägekette (5) ein Elektromotor (8) ist, **dadurch gekennzeichnet, daß** der Elektromotor durch eine elektronische Karte gesteuert (15) wird.

4. Kettensäge nach Anspruch 3, **dadurch gekennzeichnet, dass** die elektronische Karte (20) zur Steuerung der elektrischen Pumpe (13, 13a) konfiguriert ist, um Daten zum Antreiben der Sägekette (5) von der elektronischen Steuerkarte (15) des Elektromotors (8) zu empfangen.

5. Kettensäge nach einem der Ansprüche 3 oder 4, **dadurch gekennzeichnet, dass** die elektronische Karte (20) zur Steuerung der elektrischen Pumpe (13, 13a) und die elektronische Steuerkarte (15) des Elektromotors (8) zum Antreiben der Sägekette (5) in einer einzigen gemeinsamen elektronischen Karte kombiniert werden.

6. Kettensäge nach einem der Ansprüche 3, 4 oder 5, **dadurch gekennzeichnet, dass** derselbe Akkumulator (14) zum Speichern von elektrischer Energie sowohl den Motor (13a) der elektrischen Pumpe (13) als auch den Antriebsmotor (8) der Schneidvorrichtung (5, 6) mit Energie versorgt.

7. Kettensäge nach einem der Ansprüche 3, 4 oder 5, **dadurch gekennzeichnet, dass** die elektronische Steuerkarte (20) der elektrischen Pumpe (13, 13a) Daten betreffend dem Energieverbrauch des Elektromotors (8) beim Antreiben der Sägekette (5) über die elektronische Steuerkarte (15) des Elektromotors während der Verwendung der Kettensäge. erhält.

8. Kettensäge nach einem der Ansprüche 3, 4 oder 5, **dadurch gekennzeichnet, dass** die elektronische Steuerkarte (20) der elektrischen Pumpe (13, 13a) Daten bezüglich des Drehmoments des Elektromotors (8) zum Antreiben der Sägekette (5) über die elektronische Steuerkarte (15) des Elektromotors während der Verwendung der Kettensäge. erhält.

9. Kettensäge nach einem der Ansprüche 2 bis 8, **dadurch gekennzeichnet, dass** die elektronische Steuerkarte (20) der elektrischen Pumpe (13, 13a) Daten von einem oder mehreren Sensoren empfängt und verarbeitet.

10. Kettensäge nach einem der Ansprüche 2 bis 9, **dadurch gekennzeichnet, dass** die Kettensäge einen Sensor (17) aufweist, der es erlaubt Daten über die Temperatur der Kettenführung (6) an die elektronischen Steuerkarte (20) der elektrischen Pumpe (13) zu übermitteln.

11. Kettensäge nach einem der Ansprüche 2 bis 10, **dadurch gekennzeichnet, dass** die Kettensäge einen Sensor (16) aufweist, der es erlaubt Daten über den Schmiermittelverbrauch an die elektronischen Steuerkarte (20) der elektrischen Pumpe (13, 13a) zu übermitteln.

12. Kettensäge nach einem der Ansprüche 2 bis 11, **dadurch gekennzeichnet, dass** die elektronische Karte (20) zur Steuerung der elektrischen Pumpe (13, 13a) ausgebildet ist, um den Antrieb der Pumpe mit veränderlicher Geschwindigkeit zu steuern, in Abhängigkeit von mindestens einem Parameter aus den Daten bezüglich des Stromverbrauches des Motors (8) zum Antrieb der Sägekette (5) oder des Drehmoments des Motors und/oder von einem Temperatursensor (17) der Kettenführung (6) und /oder einem Öl-Verbrauchs-Sensor (16) und/oder einem Ölstand-Sensor (21).

13. Kettensäge nach einem der Ansprüche 2 bis 12, **dadurch gekennzeichnet, dass** die elektronische Karte (20) zur Steuerung der elektrischen Pumpe (13, 13a) ausgebildet ist, um einen intermittierenden Betrieb der Pumpe (13) zu steuern, um eine Dosis von Schmiermittelflüssigkeit zu der Schneidvorrichtung (5, 6) zu übertragen.

14. Kettensäge nach Anspruch 13, **dadurch gekennzeichnet, dass** die elektronische Karte (20) ausgebildet ist, um das Fördern aufeinanderfolgender Mengen in einem im wesentlichen zeitlich konstanten Abstand vorzunehmen und wobei die Menge je Dosis an Schmiermittelflüssigkeit von mindestens einem der Parameter und/oder Betriebsfaktoren der Säge abhängt.

15. Kettensäge nach einem der Ansprüche 1 bis 14, **dadurch gekennzeichnet, dass** die Antriebspumpe (13) für die Schmiermittelflüssigkeit eine Verdrängerpumpe ist, beispielsweise eine Schlauchpumpe oder eine Membranpumpe oder eine Kolbenpumpe oder eine Flügelzellenpumpe oder eine Zahnradpumpe.

16. Kettensäge nach einem der Ansprüche 1 bis 15, **dadurch gekennzeichnet, daß** die Kettensäge eine Erfassungseinrichtung (16) zum Erfassen einer unzureichenden Förderung von Schmiermittelflüssigkeit an die Schneidvorrichtung (5, 6) aufweist und ein optisches oder akustisches Signal (19) bei Detektion einer unzureichenden Förderung auslöst.

17. Kettensäge nach einem der Ansprüche 2 bis 16, **dadurch gekennzeichnet, dass** die Kettensäge Mittel (21) zum Steuern des Pegels der Schmiermittelflüssigkeit in dem Reservoir (11) aufweist und von dem Mittel (21) erfasste Durchflussmängel über die elektronische Steuerkarte (20) der elektrischen Pumpe (13,13a) einen optischen oder akustischen Alarm (19) auslösen.

18. Kettensäge nach einem der Ansprüche 1 bis 17, vom Langarm-Kettensägetyp, die einen Sägekopf (4) mit den verschiedenen Elementen der Schneidvorrichtung (5, 6) aufweist und deren Antrieb (8) an dem oberen Ende einer Stange (3) montiert ist, dessen unteres Ende mit einem Handgriff (2) versehen ist, **dadurch gekennzeichnet, dass** der Behälter (11) zum Aufbewahren der Schmiermittelflüssigkeit und die elektrische Pumpe (13, 13a) zum Verteilen der Schmiermittelflüssigkeit im Bereich des Griffs (2) montiert sind und eine Leitung (12) zum Fördern der Schmiermittelflüssigkeit den Vorratsbehälter (11) mit der Schneideinrichtung (5,6) verbindet, wobei die Leitung (11) vorzugsweise in der Stange (3) angeordnet ist.

19. Kettensäge nach einem der Ansprüche 9 bis 18, **dadurch gekennzeichnet, dass** die Kettensäge eine Anordnung für einen direkten Antrieb der elektrischen Pumpe (13, 13a) umfasst, der eine direkte Ansteuerung mittels eines manuellen Steuerelements (18) erlaubt, um es zu ermöglichen, dass Öl zur Schneideeinrichtung (5, 6) gefördert wird.

20. Verfahren zum Schmieren der Schneidevorrichtung eine Kettensäge nach Anspruch 1, **dadurch gekennzeichnet, dass** die Strömungsgeschwindigkeit der Schmiermittelflüssigkeit mit der elektrischen Pumpe (13, 13a) mittels einer elektronischen Steuerkarte (20) in Abhängigkeit des Wertes mindestens eines Parameter und/oder eines Betriebsparameters der Kettensäge gesteuert wird.

21. Verfahren zum Schmieren nach Anspruch 20, **dadurch gekennzeichnet, dass** Mengen von Schmiermittelflüssigkeit periodisch zu der Schneideinrichtung (5,6) gefördert werden.

22. Verfahren zum Schmieren nach Anspruch 21, **dadurch gekennzeichnet, dass** das Fördern der Schmiermittelflüssigkeitsdosen periodisch in einem im wesentlichen konstanten Abstand erfolgt und die Mengen an Schmiermittelflüssigkeit dabei abhängig von den genannten Parameter oder Betriebsparameter sind.

## Claims

1. A chain saw comprising an endless cutting chain (5) mounted rotatorily on a drive pinion and on a chain guide (6) provided with a guide rail, a motor (8) driving this cutting chain, by means of the said pinion, a tank (11) for storing a lubrication fluid, together with a pump (13) for driving the lubrication fluid to a chain guide/cutting chain assembly (5-6) from the storage tank (11), wherein said pump (13) is coupled to an electric drive motor (13a), **characterised in that** said drive motor of the pump is independent of the drive motor (8) of the cutting chain (5) allowing direct actuation of the electric pump from a manual control mechanism before actuation of the drive motor of the cutting chain.

2. The chain saw according to Claim 1, **characterised in that** the electric drive motor (13a) of the pump (13) is controlled by an electronic card (20) which receives information relating to at least one operating parameter or factor of said chain saw in such a manner as to modulate the lubrication flow.

3. The chain saw according to any one of Claims 1 or 2, whose drive motor of the cutting chain (5) comprises an electric motor (8), **characterised in that** the electric motor is controlled by an electronic card (15).

4. The chain saw according to Claim 3, **characterised in that** the electronic card (20) controlling the electric pump (13-13a) is configured to receive data deriving from the electronic control card (15) of the electric drive motor (8) of the cutting chain (5).

5. The chain saw according to any one of Claims 3 or 4, **characterised in that** the electronic control card (20) of the electric pump (13-13a) and the electronic control card (15) of the electric drive motor (8) of the cutting chain (5) are combined in one and the same electronic card.

6. The chain saw according to any one of Claims 3, 4 or 5, **characterised in that** the same electrical energy storage accumulator (14) supplies simultaneously the motor (13a) of said electric pump (13) and the drive motor (8) of the cutting device (5-6).

7. The chain saw according to any one of Claims 3, 4 or 5, **characterised in that** the electronic control card (20) of the electric pump (13-13a) receives data relating to the current consumed by the electric drive motor (8) of the cutting chain (5) via the electronic control card (15) of said electric motor whilst using said chain saw.

8. The chain saw according to any one of Claims 3, 4 or 5, **characterised in that** the electronic control card (20) of the electric pump (13-13a) receives data relating to the torque of the electric drive motor (8) of the cutting chain (5) via the electronic control card (15) of said electric motor whilst using said chain saw.

9. The chain saw according to any one of Claims 2 to 8, **characterised in that** the electronic control card (20) of the electric pump (13-13a) receive and processes data transmitted by one or more sensors.

10. The chain saw according to any one of Claims 2 to 9, **characterised in that** it comprises a sensor (17) data relating to the temperature of the chain guide (6) to be transmitted to the electronic control card (20) of the electric pump (13).

11. The chain saw according to any one of Claims 2 to 10, **characterised in that** it comprises a sensor (16) enabling data relating to the flow of the lubrication fluid to be transmitted to the electronic control card (20) of the electric pump (13-13a).

12. The chain saw according to any one of Claims 3 to 11, **characterised in that** the electronic control card (20) of the electric pump (13-13a) is configured for controlling the variable speed derive of said pump as a function of at least one parameter derived from the data relating to the current consumed by the drive motor (8) of the cutting chain (5) or to the torque of this motor, and/or derived from a temperature sensor (17) of the chain guide (6), and/or a sensor (16) of the oil flow, and/or an oil level sensor (21).

13. The chain saw according to any one of Claims 2 to 12, **characterised in that** the electronic control card (20) of the electric pump (13-13a) is configured for controlling an intermittent operation of this pump (13) in order to transmit lubrication fluid doses to the cutting device (5-6).

14. The chain saw according to Claim 13, **characterised in that** the electronic control card (20) is configured so that the transmission of the successive doses is spaced by an essentially constant period and so that the quantifies of lubrication fluid in the doses are a function of at least one of the operating parameters and/or factors of the saw.

15. The chain saw according to Claims 1 to 14, **characterised in that** the drive pump (13) for the lubrication fluid is a volumetric pump, for example a peristaltic pump, or a membrane pump, or a piston pump, or a pallet pump or a gear pump.

16. The chain saw according to any one of Claims 1 to 15, **characterised in that** it comprises a device (16) for detecting an insufficient flow of lubrication fluid to the cutting device (5-6) and for triggering a visual or acoustic signal (19) if such insufficient flow is detected.

17. The chain saw according to any one of Claims 2-16, **characterised in that** it comprises a device (21) for controlling the level of lubrication fluid contained in the tank (11), the insufficiencies of flow detected by this device (21) resulting in the triggering, via then electronic control card (20) of the electric pump (13-13a), of a visual or acoustic signal (19).

18. The chain saw according to any one of Claims 1 to 17, of the pole pruner type, wherein a saw head (4) comprising the different mechanisms of the cutting device (5-6) and their drive system (8) is mounted at the upper end of a pole (3) whose lower end is fitted with a control handle (2), **characterised in that** the storage tank (11) for the lubrication fluid and the electric pump (13-13a) for the distribution of this lubrication fluid are installed at the level of said handle (2), wherein a feed pipe (12) for the lubrication fluid connects the storage tank (11) to the cutting device (5,6) and wherein this pipe (11) is preferably housed in said pole (3).

19. The chain saw according to any one of Claims 9 to 18, **characterised in that** it comprises a drive allowing direct actuation of the electric pump (13-13a) from a manual control mechanism (18), thus enabling the oil to be fed to the chain guide/cutting chain assembly (5, 6).

20. A method for lubricating the cutting device of a chain saw according to Claim 1, **characterised in that** the flow of the electric distribution pump (13-13a) for the lubrication fluid is controlled by means of an electronic card (20) as a function of the value of at least one operating parameter and/or factor of said chain saw.

21. The lubrication method according to Claim 20, **characterised in that** doses of lubrication fluid are supplied intermittently to the cutting device (5, 6).

22. The lubrication method according to Claim 21, **characterised in that** the doses of lubrication fluid are supplied by spacing the discharges of these doses by an essentially constant period, wherein said doses contain quantities of lubrication fluid which are a function of said operating parameter or factor.
